Europäisches Patentamt

European Patent Office

Office européen des brevets

(11) Numéro de publication: **0 423 030 A1**

# DEMANDE DE BREVET EUROPEEN

(21) Numéro de dépôt: 90402828.9

(22) Date de dépôt: **10.10.90**

(51) Int. Cl.5: **G01T 1/20**

(30) Priorité: **12.10.89 FR 8913352**

(43) Date de publication de la demande:
**17.04.91 Bulletin 91/16**

(84) Etats contractants désignés:
**DE GB NL**

(71) Demandeur: **COMMISSARIAT A L'ENERGIE ATOMIQUE**
**31-33, rue de la Fédération**
**F-75015 Paris(FR)**

(72) Inventeur: **Pleyber, Gaetan**
**49 rue de la République**
**F38420 Domène(FR)**
Inventeur: **Gerard, Philippe**
**406 Route de Rozat**
**F-38330 Saint Ismier(FR)**

(74) Mandataire: **Mongrédien, André et al**
**c/o BREVATOME 25, rue de Ponthieu**
**F-75008 Paris(FR)**

(54) Ecran radioluminescent à facteur de qualité et à résolution spatiale améliorés pour l'imagerie en photons X ou gamma.

(57) Ecran radioluminescent à facteur de qualité et résolution spatiale améliorés pour l'imagerie en photons X ou gamma, comportant une lame transparente (2) en matière scintillante en coopération avec un capteur d'image (16) transformant les photons lumineux produits dans la lame scintillante (2) par les photons X ou gamma en courants alimentant un système vidéo, caractérisé en ce que la lame scintillante (2) comporte, dans son volume, des lignes (4) de déviation de la lumière réparties dans une direction perpendiculaire au plan de la lame, suivant des pas inférieurs ou égaux à ceux des points image de cette lame.

FIG. 3

EP 0 423 030 A1

# ECRAN RADIOLUMINESCENT A FACTEUR DE QUALITE ET A RESOLUTION SPATIALE AMELIORES POUR L'IMAGERIE EN PHOTONS X OU GAMMA

La présente invention se rapporte au domaine de l'imagerie en photons X ou gamma à l'aide d'un écran radioluminescent qui comprend de façon classique une lame transparente en matière scintillante destinée à transformer les photons X ou gamma en photons du domaine visible, en coopération avec un capteur d'images qui reçoit ces photons du spectre visible en les transformant en courants électriques qui alimentent un système vidéo d'observation.

Elle s'applique tout particulièrement à la visualisation instantanée, avec une haute résolution spatiale, d'images radiologiques formées à partir d'une multitude de scintillations qui apparaissent simultanément et dont on mesure la somme des flux lumineux émis durant le temps de pose consacré à l'examen d'une zone déterminée du corps étudié.

Le problème technique que résout la présente invention est l'obtention d'une image à haute résolution spatiale tout en utilisant - ce qui était a priori jusqu'à ce jour incompatible - un écran scintillateur épais, assurant une quantité d'informations élevée et donc un bon facteur de mérite.

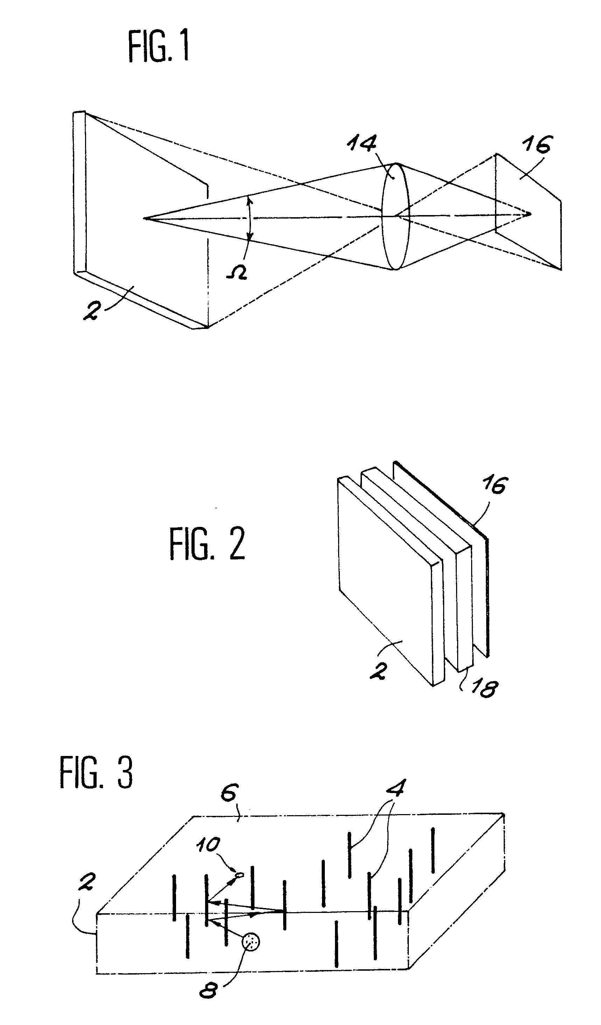

De façon connue, différentes dispositions de tels écrans radioluminescents sont utilisées et notamment celles qui comportent un dispositif optique de reprise des photons lumineux produits par le scintillateur pour les diriger ensuite sur un capteur d'image, par exemple du type à transfert de charges (Fig. 1), et ceux dans lesquels le capteur d'image et le scintillateur sont associés dans une structure coplanaire, et séparés l'un de l'autre par un guide optique (Fig. 2).

Sur la Fig. 1, on a représenté schématiquement un dispositif connu comportant un scintillateur 2, un objectif de reprise optique 14 des photons lumineux émis par le scintillateur 2 dans l'angle solide Ω et un capteur d'image 16 constitué par exemple par une caméra à transfert de charges.

Sur la Fig. 2, on a représenté schématiquement un autre dispositif connu, comportant, dans une structure coplanaire, un scintillateur 2 et un capteur d'image 16 séparés par un guide optique plan 18, chargé de transmettre les photons de scintillation au capteur 16. Dans ce dispositif, l'angle solide de reprise des photons lumineux est de $2\pi$.

Les traces laissées par les photons X ou gamma dans la lame transparente en matière scintillante constituent ce que l'on peut appeler une image latente et les différentes scintillations qui sont émises par le milieu scintillateur constituent un ensemble de sources lumineuses élémentaires émettant de manière isotrope dans toute la lame transparente et matérialisant ainsi en trois dimensions dans tout son volume les points d'impact des rayons X ou gamma avec le matériau scintillant. Pour exploiter cette image latente en trois dimensions, il faut en quelque sorte la transformer en une image en deux dimensions sous forme d'une projection orthogonale de cette image latente sur la surface de sortie des rayons lumineux du scintillateur.

Une première cause d'affaiblissement de l'information lumineuse recueillie par le capteur d'image provient du fait que tous les rayons lumineux issus des différentes scintillations ne sortent pas vers l'extérieur du scintillateur, car une partie non négligeable d'entre eux est piégée par des réflexions totales dans cette lame, dont ils ne sortent qu'affaiblis ou par les côtés latéraux.

Une deuxième cause de perte d'information découle de la difficulté d'obtenir que le plus grand nombre possible des rayons lumineux scintillants soient repris optiquement par le système qui est chargé de les transférer de la lame scintillante au capteur d'image. Cette reprise optique de l'image latente est effectuée dans un angle solide Ω dont l'axe est perpendiculaire à la surface de l'écran (voir Fig. 1).

De façon classique, la qualité de l'image lue par le capteur d'image et retransmise au système vidéo est décrite en se référant à deux grandeurs caractéristiques qui sont :

- d'une part le facteur de mérite que l'on définit comme le rapport entre le nombre de photons lumineux visibles qui sont récupérés par le capteur d'image et le nombre de photons X ou gamma associés lors de la création de l'image latente.

- d'autre part, la résolution spatiale de l'écran radioluminescent dans son ensemble qui caractérise la précision et la finesse de l'image fournie et que l'on peut définir en première approche comme la largeur à mi-hauteur de la fonction d'étalement sur la surface de sortie de chaque trace lumineuse correspondant à un point de scintillation.

Il y a jusqu'à ce jour malheureusement incompatibilité entre le perfectionnement de ces deux caractéristiques, et les écrans radioluminescents de l'art connu résultent d'un compromis entre elles, car pour avoir un bon facteur de mérite, il faut augmenter l'épaisseur de l'écran pour augmenter la lumière émise, or, plus l'écran est épais, moins la résolution spatiale est bonne.

Par ailleurs, un bon facteur de mérite nécessite aussi un bon couplage optique entre scintillateur et caméra (indépendant de la résolution) et est liée à la constitution physique de l'écran, également indépendante de la résolution spatiale.

Le problème technique que permet de résoudre la présente invention est l'optimisation des deux grandeurs définies précédemment et qui concourent globalement à la qualité de l'image obtenue par un tel dispositif.

Un autre problème technique également important et que la présente invention permet de résoudre dans une large mesure est celui qui résulte du défaut éventuel de compatibilité entre la structure matricielle du scintillateur et la structure matricielle du capteur d'image lorsque ces deux composants ont effectivement une telle structure. En effet, la structure matricielle du scintillateur interfère systématiquement avec celle du capteur d'image, tel que par exemple une caméra à transfert de charges. Or, il est très avantageux en radiographie ordinaire, et pratiquement impératif en tomographie, d'acquérir des images ayant une bonne stabilité géométrique. Dans l'art connu, on emploie donc pour ces applications des capteurs d'image à base de semi-conducteurs, comme les capteurs à transfert de charges, qui ont une telle structure matricielle, mais associés à des scintillateurs à structure non matricielle.

Par ailleurs, lorsqu'on emploie des scintillateurs comportant une association de fibres optiques formant un faisceau régulier pour obtenir un bon couplage optique, ceci limite le choix du capteur d'image à des capteurs du type des tubes Vidicon dont la rétine a une structure continue, c'est-à-dire d'un type tout à fait opposé à celui des capteurs d'image à structure matricielle, pour pouvoir conserver la finesse d'échantillonnage de l'image qui correspond au réseau des fibres optiques du scintillateur.

Pour rendre l'association de deux structures matricielles possible, il convient alors :
- soit de réaliser une parfaite coïncidence des pas des deux matrices d'échantillonnage en présence, ce qui est très difficile et limite singulièrement les conditions d'utilisation du système puisqu'il est nécessaire d'associer à chaque grandissement de l'image souhaité une structure matricielle précise du scintillateur.
- soit d'utiliser un scintillateur à structure matricielle régulière, mais selon un pas d'échantillonnage plus faible que celui du capteur d'image matriciel utilisé.

- soit de structurer le scintillateur lui-même de manière non matricielle en créant un système d'échantillonnage pseudo-continu qui n'interfère pas avec l'échantillonnage du capteur d'image matriciel.

Quoi qu'il en soit, le transfert de l'image latente volumique sur la surface de sortie du scintillateur, qui est nécessaire pour améliorer le facteur de résolution spatiale, est d'autant plus nécessaire que la lame du scintillateur a une épaisseur élevée et notamment en rapport avec la profondeur de champ de l'optique de lecture du capteur d'image.

L'invention a donc pour objet un écran radioluminescent pour l'imagerie en photons X ou gamma dont le facteur de qualité et la résolution spatiale sont améliorés en facilitant d'une part la transmission de l'image latente volumique sur la face de sortie du scintillateur et en favorisant d'autre part l'émergence de la lumière issue de la lame et la captation de la lumière par le capteur d'image en provenance de la projection précédente des scintillations sur la surface de sortie du scintillateur.

L'écran radio-luminescent objet de l'invention comporte une lame transparente en matière scintillante en coopération avec un capteur d'image transformant les photons lumineux produits dans la lame scintillante par les photons X ou gamma en courants alimentant un système vidéo, et se caractérise en ce que la lame scintillante comporte, dans son volume, des lignes de déviation de la lumière réparties dans une direction perpendiculaire au plan de la lame, suivant des pas inférieurs ou égaux à ceux des points image ramenés au format de cette lame.

Par ligne de déviation de la lumière, on entend de façon générale un domaine cylindrique mince, de direction générale perpendiculaire à la face de sortie du scintillateur, et à l'intérieur duquel les propriétés optiques de celui-ci sont modifiées de façon telle que tout rayon lumineux qui le rencontre est dévié soit par diffusion, soit par réflexion. Comme chaque ligne a une direction perpendiculaire à la surface de la lame scintillante, les rayons lumineux qui la rencontrent et qu'elle dévie ont une probabilité plus grande d'atteindre ainsi la surface rapidement et en un point proche de la projection orthogonale sur la surface du scintillateur du point source de la scintillation en cause.

Selon l'invention, les lignes de déviation de la lumière sont implantées soit selon un réseau matriciel régulier de pas inférieur ou égal à celui des points image du système vidéo ramenés homothétiquement aux dimensions de la lame, soit de façon aléatoire dans la masse scintillante avec des pas moyens inférieurs ou égaux à ceux des points image de la lame.

Les problèmes soulevés par les structures matricielles du scintillateur et du capteur sont indépendants du facteur de qualité. Cependant, la résolution spatiale peut-être limitée par l'interférence des deux structures d'échantillonnage de l'image (c'est-à-dire la structure de la lame et celle du capteur). Aussi, en fonction du capteur utilisé (matriciel ou non), le choix de la répartition des lignes de déviation n'est pas quelconque. Autrement dit, pour un capteur non matriciel, les lignes de déviation peuvent être réparties de façon quelconque, c'est-à-dire de façon aléatoire ou matricielle avec dans les deux cas des pas moyens qui définissent la taille du point image ramené à la lame et donc la résolution spatiale de l'image ; pour un capteur matriciel, les lignes de déviation peuvent être réparties de façon aléatoire ou matricielle avec dans les deux cas des pas moyens au plus égaux à la moitié des pas du point image (ou pas d'échantillonnage) ramené au format de la lame, afin d'éviter l'apparition de défauts dans l'image. Plus précisément pour un capteur matriciel donné, la répartition des lignes de déviation dans le cas matriciel doit être de préférence réalisée suivant des pas nettement inférieurs à la moitié des pas d'échantillonnage de l'image pour rendre imperceptibles les moirés dans l'image. Dans le cas d'une répartition aléatoire, les moirés n'existent pas et les pas peuvent être supérieurs à ceux de la structure matricielle; on voit donc l'intérêt de l'utilisation d'une répartition aléatoire.

La dissémination aléatoire de nombreuses lignes de déviation de cette espèce a donc pour effet de favoriser l'impact sur la surface d'un rayon en un point proche de la projection du point source sur cette même surface du scintillateur sans pour autant donner à la projection de l'image latente sur la surface de sortie de celui-ci une structure matricielle. En d'autres termes, la présence des lignes de déviation sur le trajet des rayons lumineux à l'intérieur de la masse scintillante, a pour effet de réaliser la projection d'une grande partie de l'image volumique latente sur la surface de sortie du scintillateur selon une image en deux dimensions sans structure matricielle. L'utilisation de lignes de déviation réparties de façon matricielle ou aléatoire améliore la qualité globale de l'écran radio-luminescent en permettant une meilleure captation par le capteur d'image de l'image latente obtenue par scintillation en préservant une bonne résolution spatiale.

Selon l'invention, les lignes de déviation optique de la lumière sont constituées par des défauts de nature physique et/ou chimique induits par tout moyen connu dans la masse scintillante tels que, par exemple, le bombardement ou l'implantation ionique.

Selon d'autres modes de mise en oeuvre, les lignes de déviation sont réalisées à l'aide de trous cylindriques parallèles creusés dans la masse scintillante elle-même.

Une autre caractéristique complémentaire de l'écran radio-luminescent objet de l'invention, qui a pour but d'optimiser le couplage optique entre la masse scintillante et le capteur d'image, consiste en ce que la surface de sortie de la lame scintillante est munie de reliefs composés par exemple par une série de lentilles intégrées qui focalisent la lumière dans l'angle de reprise du capteur d'image.

Dans un autre mode de mise en oeuvre de l'invention, le conditionnement de la surface de sortie pour optimiser le couplage optique consiste à interposer sur celle-ci un écran fluorescent suffisamment mince pour que le phénomène de réflexion totale ne puisse pas s'y produire. Accessoirement, cette couche fluorescente mince peut également servir pour adapter la longueur d'onde de la lumière émise aux possibilités de réception du capteur d'image pour améliorer aussi le couplage optique.

On connaît certes le document GB-A-2 204 769 qui est relatif à un détecteur de radiations et comporte une lame scintillante creusée, dans sa masse, de rainures en forme de sillons destinées à guider, dans cette masse, les photons lumineux des différentes scintillations provoquées par des rayonnements énergétiques X ou gamma.

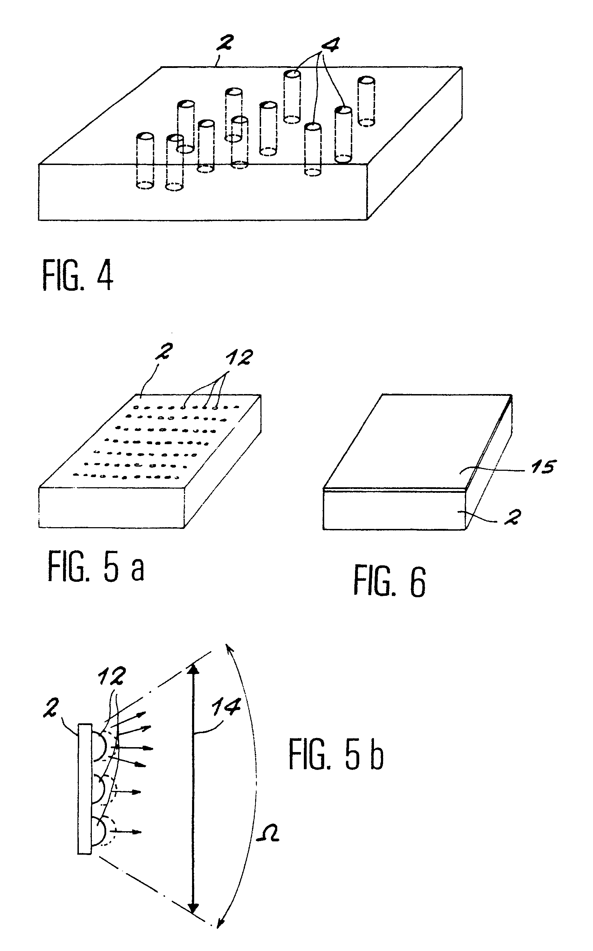

Toutefois ces rainures situées à deux niveaux superposés (Fig. 5, 6, 8 et 9) ont pour but de définir des domaines géographiques d'observation, comme expliqué aux Fig. 5 et 6, dans lesquels on détecte les rayons X ou gamma, séparément un par un, dans le temps et dans l'espace, par l'arrivée de scintillations lumineuses classées selon leur intensité. Un tel procédé ne permet de faire que de l'imagerie spectroscopique et nécessite un traitement ultérieur par ordinateur des données acquises pour construire l'image à partir des informations recueillies sur chaque scintillation.

D'autre part, du fait que les rainures sont creusées mécaniquement par ablation du matériau scintillateur, les sillons ne peuvent dépasser quelques microns de largeur pour une profondeur au plus égale à cinq fois cette largeur, alors que les lignes de déviation de la lumière selon la présente invention peuvent avoir un diamètre de l'ordre de quelques centaines d'Angströms ($10^{-8}$ mètre) avec un rapport longueur/diamètre voisin de 500. Ceci est fondamental lorsqu'on veut visualiser instantanément avec une haute résolution spatiale, des images radiologiques formées d'une multitude de scintillations qui apparaissent simultanément et dont on mesure la somme des flux lumineux émis durant le temps de pose consacré à l'examen d'une zone déterminée du corps étudié.

Enfin, la structure préconisée dans ce brevet ne permet pas d'obtenir, comme celle de la présente invention, une projection immédiate en deux dimensions immédiate vers la surface de la lame scintillante de l'image latente à trois dimensions telle qu'elle apparaît au sein de celle-ci, avec un aussi bon facteur de qualité pour une haute résolution spatiale qui peut être inférieure au micron.

De toutes façons, l'invention sera mieux comprise en se référant à la description qui suit de plusieurs exemples de mise en oeuvre donnés à titre indicatif et nullement limitatif, en se référant aux figures 3 à 6 ci-jointes sur lesquelles :

- la figure 3 représente une lame de matière scintillante munie de lignes de déviation de la lumière disséminées à l'intérieur de cette lame ;
- la figure 4 montre une lame scintillante comportant des lignes de déviation réalisées à partir de bombardements d'ions très énergétiques selon une dissémination aléatoire ;
- la figure 5a représente une lame scintillante recouverte de petites lentilles hémisphériques juxtaposées de façon aléatoire et
- la figure 5b montre en coupe l'action sur la lumière émergente de ce revêtement optique.

La figure 6 montre en perspective une couche fluorescente mince associée au scintillateur.

Sur la figure 3, on a représenté une lame de matériau scintillant transparent 2 à sa propre émission comportant, conformément à la présente invention, un certain nombre de lignes de déviation de lumière telles que 4 constituées par des petits cylindres minces juxtaposés dans la masse scintillante 2, perpendiculaires à la surface de sortie 6 de cette même masse, de longueurs égales à l'épaisseur utile de la masse et créant une discontinuité optique de celle-ci. On a également sur cette figure 3 schématisé une scintillation 8 avec des photons lumineux dont le trajet marqué par des flèches se réfléchit ou diffuse sur un certain nombre de lignes de déviation 4 précédentes pour finalement émerger en 10 sur la surface de sortie 6 de la lame scintillante. Comme déjà expliqué précédemment, les lignes de déviation 4 ainsi disséminées dans la lame scintillatrice 2 permettent de transformer l'image latente volumique des photons 8 en une image de sortie composée de sources lumineuses 10 émettrices de photons sur la surface de sortie 6 de la lame scintillante 2. Ceci permet, par conséquent, une bien meilleure saisie de l'image lumineuse par le capteur d'image, non représenté, mais situé de façon connue en regard du scintillateur 2. Conformément à l'invention, l'un des effets des lignes de déviation de la lumière 4 est d'obtenir une émergence des photons ayant scintillé au point 8 au voisinage de la projection orthogonale 10 de ce point sur la surface de sortie 6 du scintillateur 2.

Selon l'invention, lorsque l'on veut réaliser des lignes de déviation 4 ayant des diamètres submicroniques, le moyen le plus simple pour les obtenir consiste à bombarder la masse du scintillateur 2 par des ions lourds.

A titre d'exemple non limitatif, de telles lignes de déviation de la lumière ont été obtenues dans des grenats de $Gd_3Ga_5O_{12}$ (GGG) dopés au Tb en bombardant de tels scintillateurs sur une épaisseur d'une cinquantaine de microns correspondant à l'épaisseur utile du scintillateur à l'aide d'ions de Xénon d'une énergie de 5 MeV par nucléon. On réalise ainsi une transformation de la matière du scintillateur qui, sur la trace du bombardement, devient amorphe, et par conséquent est susceptible de modifier les trajets d'un rayon lumineux.

Dans d'autres réalisations, on a ensuite utilisé de l'acide orthophosphorique à une température de l'ordre de 50°C à 100°C pour attaquer préférentiellement les zones précédentes amorphisées et réaliser ainsi des trous d'un diamètre de 1000 Å environ et statistiquement bien répartis.

Le choix de l'énergie des ions lourds d'irradiation et de la dose permet d'adapter exactement les conditions d'irradiation à la longueur recherchée pour les trous ; l'irradiation de la masse du scintillateur dans le faisceau d'un accélérateur de particules conduit effectivement à une répartition aléatoire des lignes de déviation de la lumière dans la masse scintillante avec une dimension des trous dépendant des conditions de freinage des ions dans la matière et des conditions de l'attaque chimique ultérieure.

Dans le cas particulier où l'on utilise un capteur d'image fonctionnant de façon matricielle, il faut éviter de façon préférentielle pour les raisons exposées précédemment dans la transformation qui consiste à projeter l'image latente volumique sur le plan de la face de sortie, de donner à cette image de transfert une structure matricielle intermédiaire. Il peut donc dans ce cas y avoir intérêt, même dans le cas d'une imagerie millimétrée, à pratiquer une implantation aléatoire dans la masse scintillante avec les moyens mécaniques habituels de perçage et en imprimant par commande numérique une structure pseudo-aléatoire adéquate. Une disposition supplémentaire peut être par ailleurs recherchée aussi bien pour une lame à structure matricielle qu'aléatoire dans le fait de remplir ces mêmes cylindres par un matériau réfléchissant ou diffusant la lumière.

Dans le cas très particulier des scintillateurs liquides, les lignes de déviation de la lumière selon l'invention peuvent être par exemple des fils réflecteurs ou diffusants placés perpendiculairement au plan de détection.

La figure 4 décrit une implantation à dissémination aléatoire d'un certain nombre de lignes de déviation 4 dans une lame scintillante 2, ces lignes de déviation étant réalisées à partir de bombardements d'ions très énergétiques conduisant à des lignes de déviation de 50 microns de longueur avec un diamètre de 1000 Å environ.

En se référant maintenant aux figures 5a et 5b, on va décrire un exemple de conditionnement de la surface de sortie du scintillateur destiné à réduire l'importance de la réflexion totale et à orienter la lumière issue des scintillations dans l'angle solide Ω de reprise de l'information optique par le capteur d'image.

A cet effet, on utilise une modification du relief, initialement plan, de la masse scintillatrice 2 en y plaçant un ensemble de petites lentilles convergentes juxtaposées 12, constituées par exemple par des billes hémisphériques placées sur la surface (Fig. 5a). On voit sur la figure 5b comment la lumière sortant de la lame 2 au travers des micro-lentilles 12 est renvoyée dans l'angle solide Ω de lecture de l'information lumineuse par la face d'entrée 14 de l'optique de reprise de l'image.

Les lentilles 12 peuvent être réalisées notamment par micro-lithographie directe sur la lame scintillante 2.

Selon l'invention, il peut également être utile de conditionner la surface de sortie du scintillateur 2 de façon à adapter la longueur d'onde de la lumière visible quittant le scintillateur à la réponse du capteur d'image. Dans ce cas, on peut créer comme représenté figure 6 sur la surface de la lame scintillante 2 une couche très mince 15 émettant sa propre lumière par fluorescence sous l'effet des rayons lumineux de scintillation amenés en surface par les lignes de déviation, objet de l'invention.

Cette couche de surface a une épaisseur telle que le phénomène de réflexion totale ne puisse s'y produire et typiquement elle est choisie inférieure à 300 Å pour les longueurs d'onde visibles. Dans cette couche, par ailleurs, aucune structure matricielle n'apparaît et il n'est pas à craindre d'obtenir des moirés avec un capteur du type à transfert de chargess.

Pour obtenir la couche fluorescente précédente, deux moyens principaux peuvent être mis en oeuvre dans le cadre de l'invention, à savoir :
- la réalisation de cette couche par croissance épitaxique d'un cristal fluorescent, par exemple le GGG dopé au Tb sur la lame ;
- la réalisation de cette couche fluorescente par implantation d'ions dopants de type Tb directement dans le substrat initial. Dans cette hypothèse, il peut être parfois nécessaire de faire subir au scintillateur un traitement thermique adéquat pour lui permettre de retrouver ses propriétés scintillatrices qui auraient été détruites en surface au cours d'une irradiation d'implantation d'énergie trop élevée.

## Revendications

1. Ecran radioluminescent à facteur de qualité et résolution spatiale améliorés pour l'imagerie en photons X ou gamma, comportant une lame transparente (2) en matière scintillante en coopération avec un capteur d'image (16) transformant les photons lumineux produits dans la lame scintillante (2) par les photons X ou gamma en courants alimentant un système vidéo, caractérisé en ce que la lame scintillante (2) comporte, dans son volume, des lignes (4) de déviation de la lumière réparties dans une direction perpendiculaire au plan de la lame, suivant des pas inférieurs ou égaux à ceux des points image ramenés au format de cette lame.

2. Ecran radioluminescent selon la revendication 1, caractérisé en ce que ces lignes (4) de déviation de la lumière sont constituées par des défauts de nature physique et/ou chimique induits dans la masse scintillante.

3. Ecran radioluminescent selon la revendication 1, caractérisé en ce que ces lignes (4) de déviation de la lumière sont constituées par des trous creusés dans la masse scintillante.

4. Ecran radioluminescent selon l'une quelconque des revendications 1 à 3 précédentes, caractérisé en ce que les lignes (4) de déviation sont implantées selon un réseau matriciel régulier dans la masse scintillante (2).

5. Ecran radioluminescent selon l'une quelconque des revendications 1 à 3, caractérisé en ce que les lignes (4) de déviation sont implantées de façon aléatoire dans la masse scintillante (2).

6. Ecran radioluminescent selon l'une quelconque des revendications 1 à 5 précédentes à couplage optique amélioré avec le capteur d'image (16), caractérisé en ce que la surface de sortie (6) de la lame scintillante (2) comporte des reliefs tels que des lentilles intégrées (12).

7. Ecran radioluminescent selon l'une des revendications 1 à 5 précédentes à couplage optique amélioré avec le capteur d'image (16), caractérisé en ce que la surface de sortie (6) de la lame scintillante (2) comporte des reliefs tels qu'une couche fluorescente mince.

FIG. 1

FIG. 2

FIG. 3

FIG. 4

FIG. 5 a

FIG. 6

FIG. 5 b

Office européen
des brevets

RAPPORT DE RECHERCHE
EUROPEENNE

Numéro de la demande

EP 90 40 2828

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 204 769  (T. YAMASHITA)<br>* En entier *<br>– – – | 1,3 | G 01 T<br>1/20 |
| A | US-A-3 930 160  (C.F. SWINEHEART)<br>* En entier *<br>– – – | 1,3 | |
| A | GB-A-2 167 279  (I. REDMAYNE)<br>* En entier *<br>– – – – – | 1 | |

| | DOMAINES TECHNIQUES RECHERCHES (Int. Cl.5) |
|---|---|
| | G 01 T 1/00 |

Le présent rapport de recherche a été établi pour toutes les revendications

| Lieu de la recherche | Date d'achèvement de la recherche | Examinateur |
|---|---|---|
| La Haye | 23 janvier 91 | BROCK T.J. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons
 
& : membre de la même famille, document
correspondant